Europäisches Patentamt

European Patent Office

Office européen des brevets

(19)

(11) Publication number : **0 507 416 B1**

## (12) EUROPEAN PATENT SPECIFICATION

(45) Date of publication of patent specification :
**03.08.94 Bulletin 94/31**

(51) Int. Cl.⁵ : **C02F 1/44, // B01D61/02, A01C3/00**

(21) Application number : **92200967.5**

(22) Date of filing : **03.04.92**

(54) **Method for concentrating an effluent.**

(30) Priority : **05.04.91 NL 9100596**

(43) Date of publication of application :
**07.10.92 Bulletin 92/41**

(45) Publication of the grant of the patent :
**03.08.94 Bulletin 94/31**

(84) Designated Contracting States :
**AT BE CH DE DK ES FR GB GR IT LI LU MC NL PT SE**

(56) References cited :
**EP-A- 0 315 713**
**EP-A- 0 377 832**
**DE-A- 3 911 024**

(56) References cited :
**NL-A- 8 501 374**
**NL-A- 8 502 919**
**PATENT ABSTRACTS OF JAPAN vol. 13, no. 24 (C-561)(3372) 19 January 1989**

(73) Proprietor : **HAFLO MILIEUTECHNIEK B.V.**
**Oldenzaalseweg 99**
**NL-7666 LG Fleringen (NL)**

(72) Inventor : **Loohuis, Bernardus Johannes**
**Oldenzaalseweg 107**
**NL-7666 LG Fleringen (NL)**

(74) Representative : **Schumann, Bernard Herman Johan**
**OCTROOIBUREAU ARNOLD & SIEDSMA**
**Sweelinckplein 1**
**NL-2517 GK The Hague (NL)**

EP 0 507 416 B1

## Description

The invention relates to a method for concentrating an effluent. Coming to mind here are for instance contaminated water, in which substances are dissolved, in which substances are to be found in colloidally dissolved form, and/or a mixture of water with substances. Envisaged for instance is the concentrating of more or less liquid manure and particularly manure slurry.

The object of the invention in this latter respect is for instance to enable manure treatment on the farm, by contractors and by manure processing cooperatives.

The invention provides a method for concentrating an effluent such as more or less liquid manure, in particular slurry, comprising the steps of:

1) providing the effluent;
2) sieving the effluent;
    2a) removing the retained fractions;
3) subjecting to microfiltration the fractions allowed through in step 2;
    3a) removing the retained fractions;
4) subjecting to reverse osmosis the fractions allowed through in step 3;
    4a) removing the retained fractions; and
5) discharging the water obtained in step 4.

The method according to the invention comprises a pre-separation using for instance a rotating sieve press, a microfiltration step and finally a treatment based on reverse osmosis.

A considerable concentration of effluents can be achieved with the invention. It has for instance been found that 50 to 70% clean water can be obtained from slurry with a corresponding increase in the concentration of the manure. The clean water is for instance suitable for cleaning stalls or for overhead irrigation. In addition the obtained water is clean such that it can be discharged onto surface water without conflicting with legal requirements. The concentrated manure, which may or may not be mixed with the concentrate from the reverse osmosis, can be treated in factories or be distributed. Some of the advantages of the system according to the invention are:

- a smaller storage capacity is required.
- transport capacity can be considerably reduced.
- the manure is of better quality and can be spread over the land or be injected into the ground at considerably smaller cost.

To further increase the effectiveness of the various treatments the diverse steps could be performed more frequently. The outlet side of a treatment station is connected for this purpose to the infeed side.

In order to prevent as far as possible emission of ammonia, there can be added to the effluent, prior to the microfiltration, a quantity of liquid with a pH such that the resulting pH lies between 6 and 7.

The concentrated fractions can for instance be collected in a storage tank and be transported away for use in agriculture. The liquid fraction obtained after sieving is pumped to the microfiltration station, where among other things the suspended solid substance particles are filtered out of the liquid. By regularly reversing the flow direction for a short time the collected solid material can be removed from the microfilters. The particles of solid material are carried away for instance to a storage tank. The water allowed through the microfilters, in which very finely distributed contaminants are still to be found, is carried to the final station where a treatment based on reverse osmosis takes place.

Sieving can advantageously take place using a rotating sieve.

The sieving operation can take place for example with a sieve having a mesh width of 50-300 μm.

Microfiltration can preferably take place using membranes having pores smaller than 0.3 μm.

The invention will now be elucidated with reference to the annexed schematic diagram of a device designed to perform the method according to the invention.

Slurry present in a container 1 is added by means of a pump 2 to a rotating sieve installation 3. The thick fraction is partially fed back to the container 1 by means of a pump 4 and carried partially to a container 5 by means of a pump 6. The thin, watery fraction is fed via a pump 7 to an intermediate storage tank 8. The now partly cleaned effluent is carried from this storage tank 8 to a microfiltration station 10 by means of a pump 9. Such a station is per se known and comprises a number of microfiltration tubes with an axial passage and discharge to the sides. Use is made of a number of adjacently disposed tubular membranes enclosed by a jacket. circulation takes place in this case by means of a circulation pump 11 which provides a continuous flow from the bottom to the top through the microfiltration units 12. The liquid allowed through the units at the top is fed back to the intake of the circulation pump 11 and there fed once again to the units 12. The watery fraction is carried through the said filter tubes to the sides through the jacket of the units 12 to a pump 14. Such units are per se known and are supplied by the Dutch company X-Flow B.V. and others. The pump 14 pumps the permeate to a storage tank 15. The thick fraction is carried via a pump 13 to the storage tank 5.

A connection 26 can serve to supply diluted acetic acid in a quantity such that the remaining pH lies in the order of 6 to 7. This can counter ammonia emission during the treatment of manure.

By means of a pump 16 the liquid can be pumped up out of the tank 15 and be carried by means of a metering pump 17 via a so-called candle filter 18 and a high pressure pump 19 under a high pressure, for instance in the order of 70 bar, to a station 20 which performs a final cleaning based on reverse osmosis. The in this case three reverse osmosis units 21 connected in cascade are of per se known type and are supplied by the American company Dow Chemical and others. The concentrate at the outlet of the reverse osmosis station is carried by means of a pump 22 to the tank 5. The water obtained after the reverse osmosis is carried via a pump 33 to a storage tank 24, from which it can be pumped by means of a pump 25 for further use or transport.

The metering pump 17 serves to keep the units 21 clean.

The contents of storage tank 5 which consist of concentrated manure, can be transported regularly to a business that uses manure, for example an arable farm or a cattle farm, while the clean water from storage tank 24 is very suitable for cleaning stalls, overhead irrigation or like applications. If desired, this water can be discharged without problem onto surface water because the installation according to the invention is also capable of complying with the strictest environmental requirements.

The permeate obtained after sieving and/or microfiltration can, after it has been brought with an acid, for instance diluted acetic acid, to a pH in the order of 6 to 6.5, be used as flushing liquid for flushing out the manure in stalls. The freshly produced manure in the stall falls via openings in the floor, for example in the form of gratings, into the weakly acidic liquid. The formation of ammonia gas is hereby prevented, which is of benefit to the atmosphere in the stall and to the environment.

it is noted that, depending on the desired quality of the water, a further cleaning is possible by once again applying the reverse osmosis.

The appended table gives by way of example the effectiveness of the system according to the invention in concentrating pig slurry. It can be seen clearly from the table that the system according to the invention is capable of realizing a concentration of the manure such that the obtained water is clean in the legal sense of the word and can therefore be discharged without problem. In order to perform the reverse osmosis use can be made of a thin-film composition membrane.

Table

| Name | Content in pig slurry | | Content in clean water from slurry | | Permitted dis- charge in sur- face water | |
|------|------|------|------|------|------|------|
| C.O.D. | * | | 12 | mg/l | * | |
| B.O.D. | 3450 | mg/l | 1 | mg/l | 15 | mg/l |
| N.Kjeldahl | * | | 1 | mg/l | 10 | mg/l |
| Inorg.Ammonia | 2800 | mg/l | 15 | mg/l | 15 | mg/l |
| Nitrite | < 1 | mg/l | 0.015 | mg/l | * | |
| Nitrate | < 1 | mg/l | 0.015 | mg/l | * | |
| Sulphate | 150 | mg/l | 2 | mg/l | 100 | mg/l |
| Total phosphate | 150 | mg/l | 2 | mg/l | 2 | mg/l |
| Chloride | * | | 5 | mg/l | 150 | mg/l |
| | | | | | | |
| HEAVY METALS | | | | | | |
| Cadmium | 5.5 | $\mu$m/l | 0.03 | $\mu$g/l | 2.5 | $\mu$g/l |
| Chromium | 140 | $\mu$g/l | 0.13 | $\mu$g/l | * | |
| Copper | 1150 | $\mu$g/l | 0.4 | $\mu$g/l | 50 | $\mu$g/l |
| Mercury | < 0.1 | $\mu$g/l | 0.03 | $\mu$g/l | * | |
| Nickel | 210 | $\mu$g/l | 0.3 | $\mu$g/l | * | |
| Lead | 20 | $\mu$g/l | 0.3 | $\mu$g/l | * | |
| Zinc | 5000 | $\mu$g/l | 2.5 | $\mu$g/l | 200 | $\mu$g/l |
| Arsenic | 11 | $\mu$g/l | 0.05 | $\mu$g/l | * | |

* = no data known

*****

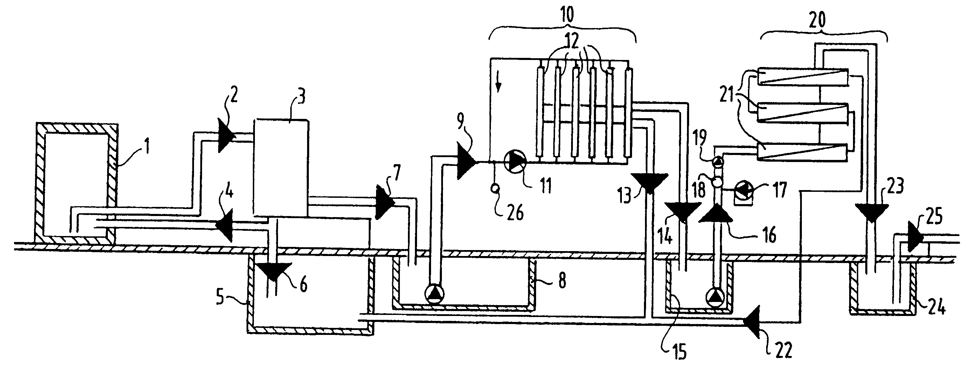

Claims

1. Method for concentrating an effluent such as more or less liquid manure, in particular slurry, comprising the steps of:
    1) providing the effluent;
    2) sieving the effluent;
        2a) removing the retained fractions;
    3) subjecting to microfiltration the fractions allowed through in step (2);
        3a) removing the retained fractions;
    4) subjecting to reverse osmosis the fractions allowed through in step (3);
        4a) removing the retained fractions; and
    5) discharging the water obtained in step (4).

2. Method as claimed in claim 1, **characterized by**:
6) treating the fractions again according to step (2a) in step (2).

3. Method as claimed in claim 1, **characterized by**:
7) treating the fractions again according to step (3a) in step (3).

4. Method as claimed in claim 1, **characterized by**:
8) adding prior to step (3) a dosed quantity of liquid with a pH such that the resulting pH lies approximately between 6 and 7.

5. Method as claimed in claim 1, **characterized by**:
9) performing step (2) using a rotating sieve.

6. Method as claimed in claim 1, **characterized by**:
10) performing step (2) using a sieve with a mesh width of 50-300 $\mu$m.

7. Method as claimed in claim 1, **characterized by**:
11) performing step (3) with a membrane having pores smaller than 1 $\mu$m.

8. Method as claimed in claim 7, **characterized in that** step (3) is performed with a membrane having pores smaller than 0.6 $\mu$m.

9. Method as claimed in claim 8, **characterized in that** step (3) is performed with a membrane having pores smaller than 0.3 $\mu$m.

10. Method as claimed in claim 1, **characterized by**:
12) performing step (3) by regularly reversing the flow direction for a short time.

11. Method as claimed in claim 1, **characterized in that** for performing step (3) use is made of a filter on a basis of polyethersulphone.


**Patentansprüche**

1. Verfahren zur Konzentration eines Abflusses, beispielsweise von mehr oder weniger flüssigem Dung, insbesondere in Schlammform, welches Verfahren die folgenden Schritte aufweist:
1) es wird der Abfluß herbeigeschafft;
2) es wird der Abfluß abgesiebt;
2 a) es werden die zurückgehaltenen Fraktionen entfernt;
3) es werden jene Fraktionen, die während des Schrittes (2) durchgelassen wurden, einer Mikrofiltration unterworfen;
3 a) es werden die zurückgehaltenen Fraktionen entfernt;
4) es werden die Fraktionen, die während des Schrittes (3) durchgelassen wurden, einer Hyperfiltration unterworfen;
4 a) es werden die zurückgehaltenen Fraktionen entfernt; und
5) es wird das während des Schrittes (4) erhaltene Wasser abgelassen.

2. Verfahren nach Anspruch 1,
dadurch gekennzeichnet, daß:
6) die Fraktionen wiederum gemäß dem Schritt (2a) in der Stufe (2) behandelt werden.

3. Verfahren nach Anspruch 1,
dadurch gekennzeichnet, daß:
7) die Fraktionen wiederum gemäß dem Schritt (3a) in der Stufe (3) behandelt werden.

4. Verfahren nach Anspruch 1,
dadurch gekennzeichnet, daß:
8) vor dem Schritt (3) eine dosierte Menge einer Flüssigkeit mit einem solchen pH zugesetzt wird, daß der resultierende pH etwa zwischen 6 und 7 liegt.

**5.** Verfahren nach Anspruch 1,
dadurch gekennzeichnet, daß:
9) der Schritt (2) unter Benutzung eines rotierenden Siebs durchgeführt wird.

**6.** Verfahren nach Anspruch 1,
dadurch gekennzeichnet, daß:
10) der Schritt (2) unter Benutzung eines Siebs durchgeführt wird, das eine Maschenweite von 50 bis 300 μm besitzt.

**7.** Verfahren nach Anspruch 1,
dadurch gekennzeichnet, daß:
(11) der Schritt (3) mit einer Membran durchgeführt wird, deren Poren kleiner sind als 1 μm.

**8.** Verfahren nach Anspruch 7,
dadurch gekennzeichnet, daß der Schritt (3) mit einer Membran durchgeführt wird, deren Poren kleiner sind als 0,6 μm.

**9.** Verfahren nach Anspruch 8,
dadurch gekennzeichnet, daß der Schritt (3) mit einer Membran durchgeführt wird, deren Poren kleiner als 0,3 μm sind.

**10.** Verfahren nach Anspruch 1,
dadurch gekennzeichnet, daß:
12) der Schritt (3) durchgeführt wird, indem regelmäßig die Strömungsrichtung kurzzeitig umgekehrt wird.

**11.** Verfahren nach Anspruch 1,
dadurch gekennzeichnet, daß zur Durchführung des Schrittes (3) ein Filter auf der Basis von Polyäthersulfon benutzt wird.


**Revendications**

**1.** Procédé de concentration d'un effluent tel qu'un fumier plus ou moins liquide, en particulier de boues, comprenant les étapes suivantes :
1) fournir l'effluent
2) tamiser l'effluent
2a) enlever les fractions retenues;
3) soumettre à microfiltration les fractions issues de l'étape (2);
3a) enlever les fractions retenues;
4) soumettre à une osmose inverse les fractions issues de l'étape (3);
4a) enlever les fractions retenues; et
5) décharger l'eau issue de l'étape (4).

**2.** Procédé selon la revendication 1, caractérisé par le fait de :
6) traiter à nouveau les fractions selon l'étape (2a) de l'étape (2).

**3.** Procédé selon la revendication 1, caractérisé par le fait de :
7) traiter à nouveau les fractions selon l'étape (3a) de l'étape (3).

**4.** Procédé selon la revendication 1, caractérisé par le fait :
8) d'ajouter avant l'étape (3) une quantité dosée de liquide avec un pH tel que le pH résultant soit approximativement compris entre 6 et 7.

**5.** Procédé selon la revendication 1, caractérisé par le fait de :
9) procéder à l'étape (2) en utilisant un tamis rotatif.

**6.** Procédé selon la revendication 1, caractérisé par le fait de :
10) procéder à l'étape (2) en utilisant un tamis dont la largeur de maille soit comprise entre 50 et 300 μm.

7. Procédé selon la revendication 1, caractérisé par le fait de :
11) procéder à l'étape (3) avec une membrane dont les pores sont plus petits que 1 $\mu$m.

8. Procédé selon la revendication 7, caractérisé en ce que l'étape (3) est effectuée avec une membrane ayant des pores plus petits que 0,6 $\mu$m.

9. Procédé selon la revendication 8, caractérisé en ce que l'étape (3) est effectuée avec une membrane ayant des pores plus petits que 0,3 $\mu$m.

10. Procédé selon la revendication 1, caractérisé par le fait de :
12) procéder à l'étape (3) en inversant régulièrement le sens du débit pendant un court instant.

11. Procédé selon la revendication 1, caractérisé en ce que pour procéder à l'étape (3), on utilise un filtre basé sur du polyéthersulfone.